## Europäisches Patentamt
## European Patent Office
## Office européen des brevets

(11) Veröffentlichungsnummer: **0 199 165**
**B1**

(12) # EUROPÄISCHE PATENTSCHRIFT

(45) Veröffentlichungstag der Patentschrift:
**28.12.88**

(21) Anmeldenummer: **86104680.3**

(22) Anmeldetag: **05.04.86**

(51) Int. Cl.⁴: **F 02 B 37/00,** F 02 B 63/04, F 02 B 73/00, B 63 J 3/00

(54) **Aufgeladener Dieselmotor.**

(30) Priorität: **25.04.85 CH 1764/85**

(43) Veröffentlichungstag der Anmeldung:
**29.10.86 Patentblatt 86/44**

(45) Bekanntmachung des Hinweises auf die Patenterteilung:
**28.12.88 Patentblatt 88/52**

(84) Benannte Vertragsstaaten:
**CH DE FR GB LI**

(56) Entgegenhaltungen:
**EP-A- 0 091 139**
**DE-A- 3 245 351**
**FR-A- 1 075 196**
**US-A- 2 918 787**

(73) Patentinhaber: **BBC Brown Boveri AG, Haselstrasse, CH-5401 Baden (CH)**

(72) Erfinder: **Streuli, Adrian, Bodenacherstrasse 5, CH-5116 Schinznach-Bad (CH)**

ACTORUM AG

## Beschreibung

Die Erfindung betrifft einen aufgeladenen Dieselmotor mit mindestens einem Abgasturbolader und separater, zur Laderturbine parallel geschalteter, leistungsabgebender Nutzturbine, welche einen Generator antreibt.

Derartige Dieselmotoren, bei denen die Nutzturbine zur Erzeugung der erforderlichen elektrischen Bordenergie herangezogen wird, sind insbesondere aus dem Schiffsbau bekannt.

So kann beispielsweise ein Generator direkt an das Reduktionsgetriebe der schnelldrehenden Nutzturbine angekuppelt werden. Eine derartige Einheit besitzt den Vorteil, irgendwo im frei verfügbaren Schiffsmotorenraum untergebracht werden zu können, unter Vorbehalt nicht allzu langer Gasleitungen. Der Nachteil dieser Lösung ist in der Erfordernis einer aufwendigen Leistungselektronik zu sehen, mit welcher die Einheit Turbine/Generator auf eine gegebene Drehzahl zu regeln ist. Die Tatsache, dass derartige Regelungen ein Mehrfaches des Turbinenpreises kosten, lässt sie aus der engeren Wahl ausscheiden. Die eigentlich nächstliegende Verwendung von wirtschaftlichen Asynchrongeneratoren scheidet ebenfalls aus, da im Gegensatz zu stationären Anlagen – bei denen das in der Regel grosse elektrische Netz die Einheit Turbine/Generator auf konstanter Drehzahl hält – bei Schiffsanlagen die gesamte Bordnetzleistung etwa in der Grössenordnung der Nutzturbinenleistung liegt; das Bordnetz ist somit nicht in der Lage, die Drehzahl einer Einheit Nutzturbine/Asynchrongenerator konstant zu halten.

Eine weitere mögliche Drehzahlregelung, bei der ein Synchrongenerator mit der Nutzturbine gekoppelt ist und diese Einheit mittels Klappen im Abgas eingeregelt wird, ist ebensowenig brauchbar. Entgegen stehen hier insbesondere die kostspielige Anordnung von regulierbaren Klappen im Abgasstrom von schwerölbetriebenen Anlagen sowie die schwer überschaubaren dynamischen Vorgänge in den langen Abgasleitungen.

Eine andere Möglichkeit, die Nutzturbine für die Stromerzeugung anzuwenden, besteht bei Schiffsdieselmotoren, die selbst einen drehzahlgeregelten Generator antreiben. Hier kann die Nutzturbine an das freie Wellenende dieses Generators angekuppelt werden. Infolge der kostspieligen Drehzahlregelung ist indessen ein Grossteil der Schiffsmotoren nicht mit einem eigenen Generator ausgerüstet. In der Regel ist dann vorgesehen, dass die Nutzturbinenleistung über ein ebenfalls kostspieliges Getriebe an die Kurbelwelle des Hauptmotors abgegeben wird.

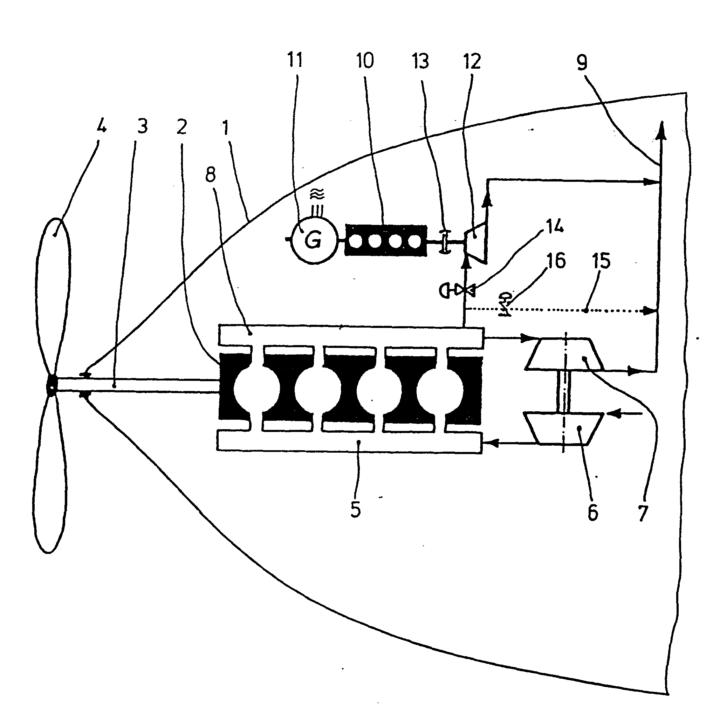

Eine weitere Lösung, bei der eine zur Turboladeturbine parallel geschaltete Nutzturbine einen Generator antreibt, ist in der am 14. CIMAC-Kongress in Helsinki herausgegebenen Druckschrift «Total Economy of Engine Service With Regard to Up-Keep Efforts, Specific Fuel Consumption and Waste Heat Recovery» in Fig. 5 gezeigt und beschrieben. Diese Nutzturbine ist mit variabler Eintrittsgeometrie versehen und arbeitet derart, dass bei gemässigten klimatischen Bedingungen elektrische Energie erzeugt wird. Bei heissem Klima hingegen wird nahezu das gesamte Motorabgas der Turboladeturbine zugeführt.

Eine weitere Anlage der eingangs genannten Art ist bekannt aus der DE-A-3245351. Daraus ist erkennbar, dass die «Hilfsenergieerzeugungsmaschine» während der Fahrt des Schiffes ausschliesslich von den Abgasen der Schiffsantriebsmaschine betreibbar ist. Hierzu reicht das für eine Nutzturbine zur Verfügung stehende Abgasgefälle jedoch nicht aus. Insbesondere im Teillastbetrieb des Hauptmotors, bei dem die Nutzturbine in der Regel abgeschaltet ist, wäre die notwendige Stromerzeugung gar nicht möglich. Darüberhinaus wird dort der Generator bei Anlagebetrieb über die Turbine und bei Stillstand über einen Hilfsmotor angetrieben, was eine aufwendige Regelung zur Folge hat.

Der Erfindung liegt deshalb die Aufgabe zugrunde, bei einer Anlage der eingangs genannten Art den Strombedarf mindestens teilweise mit der Nutzturbine zu decken, auf einfachste, preiswerte und sichere Art.

Erfindungsgemäss wird diese Aufgabe mit den kennzeichnenden Merkmalen des Patentanspruchs gelöst.

Die Vorteile der neuen Massnahme sind offensichtlich. Alle obgenannten Zusatzgeneratoren, Getriebe und Regelungen können vermieden werden. Ohne Konzeptänderungen und ohne konstruktiven Aufwand können bestehende Anlagen innert kürzester Frist mit den neuen Mitteln nachgerüstet bzw. umgerüstet werden. Hierzu sei erwähnt, dass zum Zeitpunkt der Anmeldung Nutzturbinen im Zusammenhang mit aufgeladenen Schiffsdieselmotoren noch nicht in Betrieb sind und somit die obengenannten, bekannten Lösungen mitsamt ihren Unzulänglichkeiten theoretischer Natur sind.

In der Zeichnung ist ein Ausführungsbeispiel der Erfindung schematisch dargestellt. Darin ist Strömungsrichtung der Arbeitsmedien mit Pfeilen bezeichnet.

Die stark vereinfachte Schiffsanlage, in der erfindungsunwesentliche Elemente fortgelassen sind, zeigt innerhalb eines Rumpfes 1 einen mehrzylindrigen Schiffsdieselmotor, nachstehend mit Hauptdiesel 2 bezeichnet. Über eine Welle 3 wird der Festpropeller 4 direkt angetrieben. Der aufgeladene Motor erhält Druckluft aus dem Luftreceiver 5, in den die Luft durch den Verdichter 6 eines Abgasturboladers gefördert wird. Den Verdichterantrieb besorgt die Ladeturbine 7, die mit den Abgasen aus der Sammelauspuffleitung 8 des Hauptdiesels 2 beaufschlagt ist. Nach der Entspannung werden die Abgase über den Auspuff 9 und ein Kamin in die Atmosphäre verworfen.

Zur Bereitstellung der elektrischen Bordleistung ist ein mehrzylindriger Hilfsdiesel 10 vorgesehen, der einen Synchrongenerator 11 antreibt. Hierzu ist der Hilfsdiesel drehzahlgeregelt, beispielsweise auf 1200 Umdrehungen pro Minute.

Die überschüssige Abgasenergie aus dem Hauptdiesel 2 wird einer Nutzturbine 12 zugeführt. Strömungsmässig ist diese Nutzturbine parallel zur Ladeturbine 7 geschaltet, d.h. sie wird ebenfalls mit heissen Abgasen aus der Sammelauspuffleitung 8 beaufschlagt.

Wie der Hilfsdiesel 10 wird nun auch diese Nutzturbine 12 zur Erzeugung von elektrischer Energie herangezogen. In Abweichung zu den bekannten Lösungen, bei welchen die Nutzturbine entweder einen eigenen Generator antreibt, oder mit jenem Generator verbunden ist, der vom Hauptdiesel angetrieben wird, wird die Nutzturbine nunmehr an ein freies Wellenende der Funktionseinheit Hilfsdiesel/Synchrongenerator gekuppelt. Im vorliegenden Beispiel geschieht dies über eine Freilaufkupplung 13 an der Motorseite. Es versteht sich, dass das Ankuppeln genausogut generatorseitig vorgenommen werden könnte. Selbstverständlich können auch andere Kupplungsarten, wie beispielsweise eine Zahnkupplung, eine Gummikupplung, eine Flüssigkeitskupplung u. dgl. zur Anwendung gelangen.

Die Nutzturbine ist über eine Abgasklappe 14 abschaltbar. Diese Möglichkeit, die Nutzturbine ausser Betrieb zu setzen, ist von besondere Bedeutung bei Abgasturboladern, deren Ladeturbine 7 für Teillast ausgelegt ist. Diese Teillastauslegung geschieht in der Weise, dass der Druck in der Sammelauspuffleitung 8 erhöht wird. Bei Zweitaktmotoren und gespülten Viertaktmotoren kann dies bis zu einem Wert geschehen, bei dem eine ausreichende Spülung noch gewährleistet ist; dies kann fast bis in den Bereich des Ladedruckes hinreichen. Ein erhöhte Druck in der Sammelabgasleitung 8 wird dadurch erreicht, dass der von den Abgasen beaufschlagte Turbinenquerschnitt von 100% (bei Vollastauslegung) auf 80% reduziert wird. Dieser erhöhte Druck hat nun zurFolge, dass ein grösserer Teil der potentiellen Abgasenergie ausgenutzt werden kann, da auch die Drosselverluste vom Zylinder zum Sammelbehälter hin reduziert sind. Um den erwähnten Ladedruck zu erzielen, d.h. um die erforderliche Verdichterleistung zu erbringen, benötigt die Ladeturbine 7 nicht mehr das vorhandene Energieangebot. Der nichtbenötigte Teil wird in der Nutzturbine 12 verarbeitet.

In einem solchen Fall kann bei der gezeigten Parallelschaltung der Nutzturbine die gesamte zu beaufschlagende Turbinenfläche folgendermassen unterteilt sein: 70% der Fläche entfallen auf die Ladeturbine 7, 10% auf die Nutzturbine 12.

Mit dieser Massnahme ist bei Vollast des Hauptdiesels 2 trotz unwesentlicher Reduktion der Leistungsdichte, d.h. des mittleren spezifischen Druckes um 1 bis 2% bereits eine Verbrauchsverbesserung, d.h. eine Brennstoffersparnis von ca. 3% erzielbar. Dabei werden sowohl die thermischen als auch die mechanischen Belastungen des Hauptdiesels gegenüber einer Vollastauslegung (100% Turbinenfläche) nicht ungünstiger.

Die genannte Abschaltung der Nutzturbine bei Teillast führt nun gegenüber dem konventionellen 100%-Fall zu einer Verkleinerung der Turbinenfläche um 30%, gegenüber einer nicht abschaltbaren Nutzturbine zu einer Verkleinerung von ca. 10%. Dies bewirkt eine nochmalige Steigerung des Druckes in der Sammelabgasleitung 8 und als Folge hiervon eine beträchtliche Anhebung des Ladedruckes im Luftreceiver 5. Als Ergebnis wird im Teillastbereich der spezifische Brennstoffverbrauch demnach nochmals verbessert.

Für den Fall, dass die Nutzturbine aus anderem Anlass ausser Betrieb gesetzt wird, d.h., die Abgasklappe 14 geschlossen wird, ist zwischen der Zuströmleitung zur Nutzturbine und dem Auspuff 9 eine Abblaseleitung 15 mit einer Notklappe 16 angeordnet. Deren engster Querschnitt ist entsprechend der Turbinenfläche der Nutzturbinen 12 zu bemessen. Hierduch wird gewährleistet, dass auch im Notbetrieb die Ladeturbine 7 nur jene Gasmenge verarbeiten muss, für die sie ausgelegt ist.

Bei der Nutzturbine 12 handelt es sich um eine relativ kleine, schnelldrehende Turbine. Die beispielsweise 23000 Umdrehungen pro Minute müssen deshalb über ein Getriebe auf die erforderlichen 1200 Umdrehungen pro Minute entsprechend 60 Hz reduziert werden. Zur Schmierung von Nutzturbine 12 und Getriebe kann der Schmierkreislauf des Hilfsdiesels 10 herangezogen werden.

Anhand eines realistischen Zahlenbeispiels sei die Erfindung erläutert. Es versteht sich, dass nur Approximativwerte angegeben werden, da allzu zahlreiche motorspezifische und laderspezifische Parameter die Aussagekraft von Absolutwerten verwässern würden:

Es handle sich um eine Einmotorenanlage in einem Containerschiff mit direktem Propellerantrieb. Der zur Anwendung gelangende Zweitakt-Grossdiesel weise mit 12 Zylindern eine Antriebsleistung von ca. 35000 kW auf.

Der Bedarf an elektrischer Energie eines solchen Schiffes beträgt durchschnittlich 1200 kW. Die das Bordnetz speisende Hilfsanlage besteht aus drei mit jeweils einem 1600 kW-Generator gekuppelten Hilfsdieselmotoren. Hiervon ist ein Hilfsdiesel im Leistungsbetrieb, um die jeweilige Bedarfslast zu decken, ein zweiter Hilfsdiesel läuft im Leerlauf, und der dritte Hilfsdiesel ist als Reserve vorgesehen.

Zur Bereitstellung der Ladeluft sind drei Abgasturbolader vorgesehen. Bei einem Druck von ca. 3,2 bar im Luftreceiver ist eine isentrope Verdichterleistung von 8000 kW erforderlich. Bei einem Verdichterwirkungsgrad von 85% liegen an den drei Turboladerwellen ca. 9500 kW an.

Die bei heutigen Wirkungsgraden erzielbare Leistung aus den Abgasen beträgt jedoch ca. 10500 kW bei einem Druck von 3,0 bar. Das Überangebot an Abgasenergie wird in der Nutzturbine verwertet, so dass von deren Welle rund 1000 kW an die Funktionseinheit Hilfsdiesel/Generator abgegeben werden kann.

Von den benötigten 1200 kW Bordleistung muss der Hilfsmotor demnach nur noch 200 kW erzeugen, was in einer beträchtlichen Brennstoffeinsparung resultiert. Gegenüber jenen Lösungen, bei denen die gleiche Nutzturbinenleistung an einen mit dem Hauptdiesel gekuppelten Generator abgegeben wird, ist die Einsparung hier quantitativ noch grösser, da zum einen der spezifische Brennstoffverbrauch der Hilfsdiesel grösser ist als jener des Hauptdiesels und zum andern die Hilfsdiesel in der Regel mit einem teureren Brennstoff betrieben werden als der Hauptdiesel.

Anhand dieses Beispieles ist gezeigt, dass selbst bei Grösstanlagen mit einer einzigen Nutzturbine auszukommen ist. So kann im Bedarfsfall selbst im Vollastbetrieb ohne weiteres nach Abschliessen der Abgasklappe 14 und Öffnen der Notklappe 16 die Nutzturbine von einem ersten Hilfsdiesel abgekuppelt und an einen zweiten Hilfsdiesel angekuppelt werden.

Selbstverständlich ist die Erfindung nicht auf das gezeigte und beschriebene Ausführungsbeispiel beschränkt. So können ohne weiteres mehrere Nutzturbinen zur Anwendung gelangen. Dabei könnte es zweckmässig sein, verschiedene Typengrössen zu wählen, wobei die Nutzturbinen unterschiedlich grosse Turbinenflächen aufweisen könnten. Es ergäbe sich dadurch die Möglichkeit, die einzelnen Nutzturbinen je nach Leistungsangebot getrennt und gestaffelt anzufahren.

In Abweichung zur dargestellten Einmotorenanlage könnten auch bei Mehrmotorenanlagen mit mittelschnelllaufenden Viertakt-Dieselmotoren ohne weiteres entweder eine einzige oder pro Motor eine oder pro Motor mehrere Nutzturbinen vorgesehen werden.

## Patentansprüche

Aufgeladener Dieselmotor (2) mit mindestens einem Abgasturbolader (6, 7) und separater, zur Ladeturbine (7) parallel geschalteter, leistungsabgebender Nutzturbine (12), welche einen Generator (11) antreibt, dadurch gekennzeichnet

1. Dass der Dieselmotor ein Schiffsdieselmotor ist.

2. Dass der Generator ein Synchrongenerator ist, der das Bordnetz mit elektrischer Energie beliefert.

3. Dass die Nutzturbine über ein Getriebe und eine Kupplung mit einem Hilfsdieselmotor (10) verbunden ist, wobei die Nutzturbine (12) während des Betriebes des Schiffsdieselmotors (2) ständig mit der Hilfsdiesel/Generator-Einheit (10, 11) gekuppelt ist.

## Claims

Supercharged diesel engine (2) with at least one exhaust gas turbocharger (6, 7) and a separate power turbine (12) connected in parallel with the supercharger turbine (7), the power turbine driving a generator (11), characterised in that

1. The diesel engine is a marine diesel engine.

2. The generator is a synchronous generator which supplies the on-board grid with electrical energy.

3. The power turbine is connected to an auxiliary diesel engine (10) via a gear and a clutch, the power turbine (12) being continuously coupled to the auxiliary diesel/generator unit (10, 11) during the operation of the marine diesel engine (2).

## Revendications

Moteur diesel (2) suralimenté avec au moins un turbocompresseur à gaz d'échappement (6, 7) et une turbine d'utilisation (12) séparée, fournissant de la puissance et montée et parallèle avec la turbine (7) du turbocompresseur, et qui entraîne un générateur (11) caractérisé en ce que

1. Le moteur diesel est un moteur diesel marin.

2. Le générateur est un générateur synchrone, qui fournit l'énergie électrique au réseau de bord.

3. La turbine d'utilisation est reliée à un moteur diesel auxiliaire (10) au moyen d'une distribution et d'un accouplement, la turbine d'utilisation (12) étant couplée en permanence avec l'unité diesel auxiliaire/générateur (10, 11) pendant le fonctionnement du moteur diesel marin (2).